# EUROPÄISCHE PATENTANMELDUNG

(11) **EP 3 734 119 A1**
(43) Veröffentlichungstag der Anmeldung: **04.11.2020**
(21) Anmeldenummer: 19172186.9
(22) Anmeldetag: 02.05.2019
(51) Int. Cl.: F16H 57/029, F16H 55/17, F16H 57/02

(54) **GETRIEBE SOWIE VERWENDUNG EINES SOLCHEN GETRIEBES**

(71) Anmelder: Flender GmbH, 46395 Bocholt (DE)
(72) Erfinder: Furtmann, Alexander, 46399 Bocholt (DE); Meis, Jean-Andre, 48249 Duelmen (DE)
(74) Vertreter: Maier, Daniel Oliver

(57) **Zusammenfassung**

Die Erfindung betrifft ein Getriebe (10) welches ein Gehäuse (12) als erstes Bauteil und ein in dem Gehäuse (12) angeordnetes, separat von dem Gehäuse (12) ausgebildetes und wenigstens eine Verzahnung (18) aufweisendes Getriebeelement (16) als zweites Bauteil aufweist. Das Gehäuse (12) und das Getriebeelement (16) wirken über jeweilige, in einer Flanschebene (26) angeordnete Flanschflächen (22, 24) der Bauteile drehmomentübertragend zusammen. Es ist außerdem wenigstens ein einerseits durch das Gehäuse (12) und andererseits durch das Getriebeelement (16) begrenzter und zumindest teilweise in der Flanschebene (26) und neben den Flanschflächen (22, 24) angeordneter Dichtspalt (34) vorgesehen, in welchem wenigstens ein Dichtungselement (36) angeordnet ist. Mittels des Dichtungselements (36) sind die Bauteile gegeneinander abgedichtet.

## Beschreibung

Die Erfindung betrifft ein Getriebe sowie eine Verwendung eines solchen Getriebes.

Getriebe können komplexe Einrichtungen sein, an die umfangreiche Anforderungen gestellt werden können. So kann zum einen wünschenswert sein, bei einem solchen Getriebe eine hinreichende, vorteilhafte Drehmomentübertragung sicherzustellen. Zum anderen ist üblicherweise eine hinreichende Dichtheit wünschenswert, um beispielsweise ein Austritt von Medien aus dem Getriebe und/oder einen Eintritt von Medien und/oder Schmutz in das Getriebe zu vermeiden.

Aufgabe der vorliegenden Erfindung ist es daher, ein Getriebe und eine Verwendung eines solchen Getriebes zu schaffen, sodass ein besonders vorteilhafter Betrieb des Getriebes realisiert werden kann.

Diese Aufgabe wird erfindungsgemäß durch ein Getriebe mit den Merkmalen des Patentanspruchs 1 sowie durch eine Verwendung mit den Merkmalen des Patentanspruchs 13 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Getriebe, mittels welchem beispielsweise eine Drehmoment- und/oder Drehzahlwandlung realisierbar ist. Somit weist das Getriebe beispielsweise eine von null und von eins unterschiedliche Übersetzung auf. Beispielsweise kann mittels des Getriebes ein erstes Drehmoment und/oder eine erste Drehzahl in ein von dem ersten Drehmoment unterschiedliches zweites Drehmoment bzw. in eine von der ersten Drehzahl unterschiedliche zweite Drehzahl umgewandelt werden. Das Getriebe weist ein Gehäuse auf, welches ein erstes Bauteil des Getriebes bzw. auch als erstes Bauteil bezeichnet wird. Außerdem weist das Getriebe ein Getriebeelement auf, welches zusätzlich zu dem Gehäuse vorgesehen und separat von dem Gehäuse ausgebildet ist. Das Getriebeelement wird auch als zweites Bauteil bezeichnet bzw. ist ein zweites Bauteil des Getriebes. Somit sind das Gehäuse und das Getriebeelement beispielsweise als separat voneinander ausgebildete und zumindest mittelbar, insbesondere direkt, miteinander verbundene Bauteile ausgebildet. Das Getriebeelement weist wenigstens eine Verzahnung auf. Somit ist das Getriebeelement beispielsweise als ein Zahnrad des Getriebes ausgebildet. Beispielsweise wird die zuvor genannte Übersetzung des Getriebes mittels der Verzahnung gebildet, wobei die Übersetzung eins oder von null und von eins unterschiedlich sein kann. Das Getriebe weist beispielsweise einen Eingang auf, über welchen das zuvor genannte erste Drehmoment in das Getriebe einleitbar ist. Außerdem weist das Getriebe beispielsweise einen Ausgang auf, über welchen das Getriebe das zuvor genannte zweite Drehmoment bereitstellen kann. Bezogen auf einen Übertragungspfad des Getriebes, wobei das erste Drehmoment über den Übertragungspfad in das zweite Drehmoment umwandelbar und von dem Eingang auf den Ausgang übertragbar ist, ist beispielsweise das Zahnrad in dem Übertragungspfad angeordnet und somit Teil des Übertragungspfads.

Das Gehäuse und das Getriebeelement wirken über jeweilige Flanschflächen der Bauteile drehmomentübertragend zusammen. Mit anderen Worten weist beispielsweise das Gehäuse eine erste Flanschfläche auf, und das Getriebeelement weist eine zweite Flanschfläche auf, wobei das Gehäuse und das Getriebeelement (die Bauteile) über die Flanschflächen drehmomentübertragend zusammenwirken. Dies bedeutet beispielsweise, dass die Bauteile über die Flanschflächen drehmomentübertragend miteinander verbunden sind, sodass über die Flanschflächen ein von null unterschiedliches Drehmoment von einem der Bauteile auf das andere Bauteil bzw. umgekehrt übertragbar ist oder übertragen wird, insbesondere während eines Betriebs des Getriebes, während dessen Betrieb beispielsweise das zuvor genannte erste Drehmoment in das Getriebe eingeleitet wird.

Die Flanschflächen sind dabei in einer Flanschebene angeordnet. Mit anderen Worten liegen die Flanschflächen in einer Flanschebene, wobei die Flanschebene beispielsweise senkrecht zur axialen Richtung des Getriebeelements verlaufen kann. Insbesondere ist es denkbar, dass sich die Flanschflächen in der Flanschebene gegenseitig direkt bzw. unmittelbar berühren, sodass kein weiteres, separat von den Bauteilen ausgebildetes und zusätzliches zu den Bauteilen vorgesehenes Bauelement zwischen den Flanschflächen angeordnet ist.

Das Getriebe weist ferner wenigstens einen Dichtspalt auf, welcher einerseits durch das Gehäuse und andererseits durch das Getriebeelement, insbesondere jeweils direkt, begrenzt ist. Dies bedeutet, dass der Dichtspalt beispielsweise in eine erste Begrenzungsrichtung durch das Gehäuse und in eine der ersten Begrenzungsrichtung entgegengesetzte zweite Begrenzungsrichtung durch das Getriebeelement, insbesondere direkt, begrenzt ist. Die jeweilige Begrenzungsrichtung fällt beispielsweise mit der axialen Richtung des Getriebeelements zusammen bzw. verläuft parallel zur axialen Richtung des Getriebeelements. Der Dichtspalt ist somit zwischen den Bauteilen angeordnet.

Das Getriebe umfasst darüber hinaus wenigstens ein beispielsweise separat von den Bauteilen ausgebildetes und zumindest teilweise, insbesondere zumindest überwiegend oder vollständig, in dem Dichtspalt angeordnetes Dichtungselement, mittels welchem die Bauteile gegeneinander abgedichtet sind. Der Dichtspalt ist dabei, insbesondere entlang einer schräg oder vorzugsweise senkrecht zur axialen Richtung des Getriebeelements verlaufenden Richtung, neben den Flanschflächen und zumindest teilweise in der Flanschebene angeordnet. Unter dem Merkmal, dass der Dichtspalt zumindest teilweise in der Flanschebene angeordnet ist, kann insbesondere verstanden werden, dass die Flanschebene durch den Spalt geht bzw. verläuft, das heißt dass die, insbesondere gedachte, Flanschebene den Dichtspalt schneidet oder tangiert. Insbesondere ist es denkbar, dass ein Teil des Dichtspalts auf einer ersten Seite der Flanschebene und dabei beispielsweise auf Seiten des ersten Bauteils angeordnet ist, während ein zweiter Teil des Dichtspalts auf einer der ersten Seite der Flanschebene abgewandten zweiten Seite der Flanschebene angeordnet und dabei auf Seiten des zweiten Bauteils angeordnet ist.

Es ist erkennbar, dass beispielsweise die erste Flanschfläche eine erste Funktionsfläche und die zweite Flanschfläche eine zweite Funktionsfläche ist, wobei über die erste Funktionsfläche und die zweite Funktionsfläche die Bauteile drehmomentübertragend zusammenwirken. Dies bedeutet, dass die erste Funktionsfläche und die zweite Funktionsfläche genutzt werden, um das zuvor genannte Drehmoment von dem einen Bauteil auf das andere Bauteil bzw. umgekehrt zu übertragen.

Der Dichtspalt ist beispielsweise einerseits durch eine erste Dichtfläche des Gehäuses und andererseits durch eine zweite Dichtfläche des Getriebeelements, insbesondere jeweils direkt, begrenzt. Die erste Dichtfläche ist somit beispielsweise eine dritte Funktionsfläche, wobei die zweite Dichtfläche beispielsweise eine vierte Funktionsfläche ist. Über die dritte Funktionsfläche und die vierte Funktionsfläche sind die Bauteile mithilfe des Dichtungselements gegeneinander abgedichtet. Mit anderen Worten werden die dritte Funktionsfläche und die vierte Funktionsfläche zum Abdichten der Bauteile genutzt. Eine Nutzung der dritten Funktionsfläche und der vierten Funktionsfläche zur Drehmomentübertragung zwischen den Bauteilen unterbleibt vorzugsweise, sodass bei dem erfindungsgemäßen Getriebe eine Funktionstrennung, das heißt eine Trennung der Funktionsflächen vorgesehen ist. Während beispielsweise die erste Funktionsfläche und die zweite Funktionsfläche zur Drehmomentübertragung zwischen den Bauteilen, nicht jedoch zum gegenseitigen Abdichten der Bauteile genutzt werden, werden die dritte Funktionsfläche und die vierte Funktionsfläche zum gegenseitigen Abdichten der Bauteile, nicht jedoch zur Drehmomentübertragung zwischen den Bauteilen genutzt. Durch diese Funktionstrennung können auch sehr hohe, an das Getriebe gestellte Anforderungen im Hinblick auf eine hinreichende Drehmomentübertragung zwischen den Bauteilen und im Hinblick auf eine hinreichende Dichtheit des Getriebes auf einfache, kosten- und gewichtsgünstige Weise erfüllt werden. Insbesondere lässt sich durch die Funktionstrennung und die Verwendung des Dichtungselements eine besonders hohe Dichtheit des Getriebes realisieren, sodass beispielsweise vermieden werden kann, dass ein Medium wie beispielsweise ein Schmiermittel aus dem Getriebe an dessen Umgebung austritt. Bei dem Schmiermittel handelt es sich beispielsweise um eine Flüssigkeit, insbesondere um Öl, wobei beispielsweise das Getriebeelement, insbesondere dessen Verzahnung, mittels des Schmiermittels geschmiert und/oder gekühlt wird. Außerdem kann vermieden werden, dass Medien wie beispielsweise Feuchtigkeit und/oder Objekte wie beispielsweise Schmutzpartikel aus der Umgebung des Getriebes in das Getriebe, insbesondere das Getriebegehäuse, gelangen, sodass eine besonders vorteilhafte Funktion des Getriebes auch über eine hohe Lebensdauer hinweg sichergestellt werden kann.

Als besonders vorteilhaft hat es sich gezeigt, wenn das Dichtungselement als eine Flüssigdichtung, insbesondere als eine nicht-aushärtende Flüssigdichtung, ausgebildet ist. Darunter kann insbesondere verstanden werden, dass das Dichtungselement in flüssigem bzw. viskosem Zustand bzw. Aggregatszustand vorliegt bzw. im Dichtspalt angeordnet ist. Hierdurch kann eine besonders vorteilhafte Dichtheit bzw. Abdichtung auf kosten- und gewichtsgünstige Weise realisiert werden.

Eine weitere Ausführungsform zeichnet sich dadurch aus, dass das Dichtungselement als ein Festkörper, das heißt als ein Festkörperelement und somit als eine Festkörperdichtung, ausgebildet ist. Darunter kann insbesondere verstanden werden, dass das Dichtungselement in festem Zustand bzw. Aggregatszustand in dem Dichtspalt vorliegt bzw. aufgenommen ist. Auch hierdurch lässt sich eine besonders vorteilhafte Funktionstrennung realisieren, sodass sich einerseits eine besonders vorteilhafte Drehmomentübertragung zwischen den Bauteilen und andererseits eine besonders vorteilhafte Dichtheit des Getriebes realisieren lassen.

Eine weitere Ausführungsform zeichnet sich dadurch aus, dass das Dichtungselement, insbesondere dann, wenn das Dichtungselement als der zuvor genannte Festkörper ausgebildet ist, aus einem elastisch verformbaren Werkstoff, insbesondere aus Gummi, gebildet ist. Dadurch kann eine besonders hohe Dichtheit gewährleistet werden.

Um eine besonders vorteilhafte Dichtheit auf kosten-, bauraum- und gewichtsgünstige Weise realisieren zu können, ist es in weiterer Ausgestaltung der Erfindung vorgesehen, dass das Dichtungselement jeweilige, den Dichtspalt direkt begrenzende Wandungsbereiche der Bauteile direkt berührt. Die Wandungsbereiche bilden beispielsweise die zuvor genannten Dichtflächen, wobei die Teileanzahl und somit das Gewicht, die Kosten und der Bauraumbedarf besonders gering gehalten werden können.

Der Erfindung liegen insbesondere die folgenden Erkenntnisse zugrunde: Bei Getrieben wie beispielsweise Planetengetrieben, insbesondere für Windkraftanlagen und Rohrmühlen, ist es wünschenswert, Flanschflächen zwischen jeweiligen Gehäusen und jeweiligen Getriebeelementen der Getriebe abzudichten, sodass beispielsweise kein Schmierstoff aus dem jeweiligen Getriebe an dessen Umgebung bzw. zur Flanschfläche gelangt und keine Umwelteinflüsse von außen in das Getriebe, insbesondere in dessen Inneres, bzw. zur Flanschfläche gelangen. Gleichzeitig sollte jedoch über die Flanschflächen ein hinreichend hohes Drehmoment übertragen werden können.

Üblicherweise wird für eine hinreichende Drehmomentübertragung zwischen den Bauteilen eine Kombination aus Stift- und Schraubenverbindung verwendet. Es ist denkbar, zum Abdichten einen Flüssigkleber zu verwenden, insbesondere in Kombination mit einer zusätzlichen Dichtung wie beispielsweise einem O-Ring. Der Flüssigkleber hat neben der Dichtwirkung zusätzlich noch einen schwierig zu bewertenden Einfluss auf die Drehmomentübertragung. Die Scherfestigkeit des Klebers kann zu einer Steigerung des übertragbaren Drehmoments führen. Wird diese jedoch überschritten, kann der ausgehärtete Kleber jedoch als Schmiermittel wirken und das übertragbare Moment reduzieren. Insbesondere ist es bei herkömmlichen Lösungen vorgesehen, die Flanschflächen sowohl zur Drehmomentübertragung zwischen den Bauteilen als auch zur gegenseitigen Abdichtung der Bauteile zu verwenden, was zu den oben genannten Nachteilen führen kann.

Im Gegensatz dazu ist die zuvor beschriebene Funktionstrennung bei dem erfindungsgemäßen Getriebe vorgesehen, wodurch die zuvor genannten Probleme und Nachteile vermieden werden können. Im Gegensatz zu herkömmlichen Lösungen sieht die Erfindung eine Trennung der Funktionsflächen vor, sodass die Funktion der gegenseitigen Abdichtung der Bauteile und die Funktion der Drehmomentübertragung zwischen den Bauteilen separat erfüllt werden.

Um auf besonders einfache Weise eine besonders vorteilhafte Dichtheit zu realisieren, ist es in weiterer Ausgestaltung der Erfindung vorgesehen, dass der Dichtspalt, insbesondere in radialer Richtung des Getriebeelements, auf einer ersten Seite der Flanschflächen angeordnet ist, wobei auf einer der ersten Seite gegenüberliegenden zweiten Seite der Flanschflächen ein einerseits durch das Gehäuse und andererseits durch Getriebeelement begrenzter und zumindest teilweise in der Flanschebene und neben den Flanschflächen angeordneter zweiter Dichtspalt angeordnet ist, in welchem wenigstens ein, insbesondere separat von den Bauteilen ausgebildetes, zweites Dichtungselement angeordnet ist, mittels welchem die Bauteile gegeneinander abgedichtet sind. Die vorigen und folgenden Ausführungen zum ersten Dichtungselement und zu dem ersten Dichtspalt können dabei ohne weiteres auch auf das zweite Dichtungselement und den zweiten Dichtspalt übertragen und umgekehrt. Somit ist es beispielsweise denkbar, dass eines der Dichtungselemente eine Flüssigkeitsdichtung ist, während das andere Dichtungselement ein Festkörper ist. Ferner ist es denkbar, dass beide Dichtungselemente als Flüssigkeitsdichtungen ausgebildet sind, oder beide Dichtungselemente sind als Festkörper ausgebildet.

Eine weitere Ausführungsform zeichnet sich dadurch aus, dass die Bauteile über die Flanschflächen, insbesondere ausschließlich, reibschlüssig bzw. kraftschlüssig drehmomentübertragend miteinander verbunden sind. Als besonders vorteilhaft hat es sich gezeigt, wenn die Bauteile insgesamt ausschließlich reibschlüssig drehmomentübertragend miteinander verbunden sind. Insbesondere ist es denkbar, dass die Bauteile über die Flanschflächen, insbesondere reibschlüssig und vorzugsweise ausschließlich reibschlüssig, drehfest miteinander verbunden sind. Dadurch können die Teileanzahl und somit das Gewicht und die Kosten in einem besonders geringen Rahmen gehalten werden.

Bei einer besonders vorteilhaften Ausführungsform der Erfindung ist es vorgesehen, dass das die Verzahnung aufweisende Getriebeelement einstückig ausgebildet ist. Dies bedeutet beispielsweise, dass ein die Verzahnung bildender erster Bereich des Getriebeelements und ein den Dichtspalt andererseits begrenzender zweiter Bereich des Getriebeelements einstückig miteinander ausgebildet sind, wodurch die Teileanzahl und somit die Kosten und das Gewicht besonders gering gehalten werden können.

Um einen besonders vorteilhaften Betrieb des Getriebes zu realisieren, ist es in weiterer Ausgestaltung der Erfindung vorgesehen, dass die Verzahnung eine Innenverzahnung ist.

Als weiterhin besonders vorteilhaft hat es sich gezeigt, wenn das Getriebe als ein Planetengetriebe ausgebildet ist. Hierdurch kann auf besonders bauraum- und gewichtsgünstige Weise ein besonders vorteilhafter Betrieb realisiert werden.

Um auf besonders bauraumgünstige Weise eine besonders vorteilhafte Dichtheit des Getriebes zu realisieren, ist es in weiterer Ausgestaltung der Erfindung vorgesehen, dass der Dichtspalt entlang einer senkrecht zur Flanschebene verlaufenden und beispielsweise mit der jeweiligen Begrenzungsrichtung zusammenfallenden Richtung eine Spaltbreite von, insbesondere höchstens, 0,2 mm (Millimetern) aufweist. Bei dieser Spaltbreite von 0,2 mm handelt es sich um einen Beispielwert, nicht zwangsläufig um eine fixe Obergrenze.

Um schließlich einen besonders vorteilhaften Betrieb des Getriebes realisieren zu können, ist es in weiterer Ausgestaltung der Erfindung vorgesehen, dass die Bauteile miteinander verschraubt sind und dadurch über die Flanschflächen, insbesondere reib- bzw. kraftschlüssig, drehmomentübertragend miteinander zusammenwirken.

Ein zweiter Aspekt der Erfindung betrifft eine Verwendung eines erfindungsgemäßen Getriebes, wobei das Getriebe für eine Windkraftanlage oder für eine Rohrmühle verwendet wird. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Selbstverständlich kann das Getriebe für andere Anwendungen bzw. für jedwede Anwendung verwendet werden.

Insgesamt ist erkennbar, dass - um auch besonders hohe Anforderungen an das Getriebe insbesondere im Hinblick auf eine besonders vorteilhafte Dichtheit und im Hinblick auf eine hinreichende Drehmomentübertragung erfüllen zu können - das Getriebe in einem äußeren Bereich und/oder in einem inneren Bereich der beispielsweise eine Flanschverbindung bildenden Flanschflächen jeweils ein definierter Spalt in Form des jeweiligen Dichtspalts gezielt vorgesehen ist, wobei der Dichtspalt vorzugsweise zumindest teilweise, insbesondere zumindest überwiegend oder vollständig, mit dem vorzugsweise als nicht-aushärtende Flüssigdichtung ausgebildeten Dichtungselement befüllt oder gefüllt ist. Als die Flüssigdichtung kann beispielsweise ein Klebstoff, insbesondere ein Flüssigklebstoff, verwendet werden. Ein Vorteil der Flüssigdichtung liegt darin, dass diese im Bereich des Dichtspalts gezielt ihre vorteilhafte Dichtwirkung entfalten kann. Dadurch, dass die auch als Dichtmasse bezeichnete bzw. als eine Dichtmasse ausgebildete Flüssigdichtung nicht aushärtet, kann die Flüssigdichtung ihre Dichtwirkung auch bei Mikrobewegungen beibehalten. Ein insbesondere zentraler Bereich der Flanschverbindung bleibt frei, insbesondere von dem Dichtungselement, wodurch die Flanschverbindung mit definierten Bedingungen die Drehmomentübertragung zwischen den Bauteilen gewährleisten kann. Mit anderen Worten kann durch die beschriebene Funktionstrennung der Erfindung vermieden werden, dass die Flanschflächen zur Abdichtung genutzt werden, sodass vermieden werden kann, dass zwischen den Flanschflächen ein Dichtungselement angeordnet ist. Dadurch kann eine hinreichend hohe Drehmomentübertragung zwischen den Bauteilen gewährleistet werden. Insbesondere kann durch die Erfindung der Verbrauch an Flüssigdichtung bzw. Flüssigkleber im Vergleich zu herkömmlichen Lösungen reduziert werden, da nur noch ein definierter Bereich der Flanschverbindung mittels der Flüssigdichtung gedichtet wird. Der definierte Bereich umfasst dabei oder ist der Dichtspalt. Die Funktion der Drehmomentübertragung kann besonders vorteilhaft gewährleistet werden, da kein zusätzlicher Stoff mehr zwischen den Flanschflächen vorhanden ist. Insbesondere dann, wenn die Bauteile über die Flanschflächen ausschließlich reibschlüssig drehmomentübertragend miteinander verbunden sind, ist die jeweilige Flanschfläche eine Reibfläche, wobei die Reibflächen sich beispielsweise direkt gegenseitig berühren und somit aneinander reiben. Hierdurch sind die Bauteile reib- bzw. kraftschlüssig drehmomentübertragend über die Flanschflächen miteinander verbunden. Diese reibschlüssige drehmomentübertragende Verbindung wird erfindungsgemäß nicht durch das bzw. nicht durch ein Dichtungselement beeinträchtigt, da vorzugsweise die Flanschflächen frei von Dichtungselementen sind. Mit anderen Worten ist es vorzugsweise vorgesehen, dass zwischen den Flanschflächen kein Dichtungselement angeordnet ist, sodass eine hinreichend hohe Drehmomentübertragung gewährleistet werden kann.

Häufig eingesetzte Flüssigkleber haben diesbezüglich den Nachteil, dass diese während ihrer Lebensdauer durch Außenereignisse in ihrem Einfluss auf die Drehmomentübertragung schwanken können. Zu Beginn erhöhen diese das übertragbare Drehmoment durch ihre Klebwirkung, können aber nach einer Überlast auch reibungsreduzierend wirken. Durch eine Abdichtung sowohl zur Umwelt bzw. Umgebung als auch zum Inneren des Getriebes kann ein definierter Zustand für die Flanschflächen, insbesondere Reibflächen, zur Drehmomentübertragung sichergestellt werden. Ferner kann durch die vorliegende Erfindung die Auslegung der Flanschverbindung besonders sicher erfolgen. Im Gegensatz zu dem Einsatz von O-Ringen ist der Fertigungs- und Montageaufwand der Spaltlösung deutlich reduziert.

Da die Bauteile über die Flanschflächen, insbesondere reibschlüssig, drehmomentübertragend miteinander verbunden sind, bilden die beispielsweise als Reibflächen fungierenden oder ausgebildeten Flanschflächen die zuvor genannte Flanschverbindung, mittels welcher bzw. über welche die Bauteile, insbesondere reibschlüssig, drehmomentübertragend miteinander verbunden sind.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmalen und Merkmalskombinationen sind nicht nur in der jeweils angegebenen Kombination, sondern auch in anderen Kombinationen oder in Alleinstellung verwendbar, ohne den Rahmen der Erfindung zu verlassen. Die Zeichnung zeigt in:
- FIG 1: ausschnittsweise eine schematische Schnittansicht eines erfindungsgemäßen Getriebes gemäß einer ersten Ausführungsform;
- FIG 2: ausschnittsweise eine schematische Schnittansicht des Getriebes gemäß einer zweiten Ausführungsform;
- FIG 3: ausschnittsweise eine schematische Schnittansicht des Getriebes gemäß einer dritten Ausführungsform; und
- FIG 4: ausschnittsweise eine schematische Schnittansicht des Getriebes gemäß einer vierten Ausführungsform.

In den Figuren sind gleiche oder funktionsgleiche Elemente mit gleichen Bezugszeichen versehen.

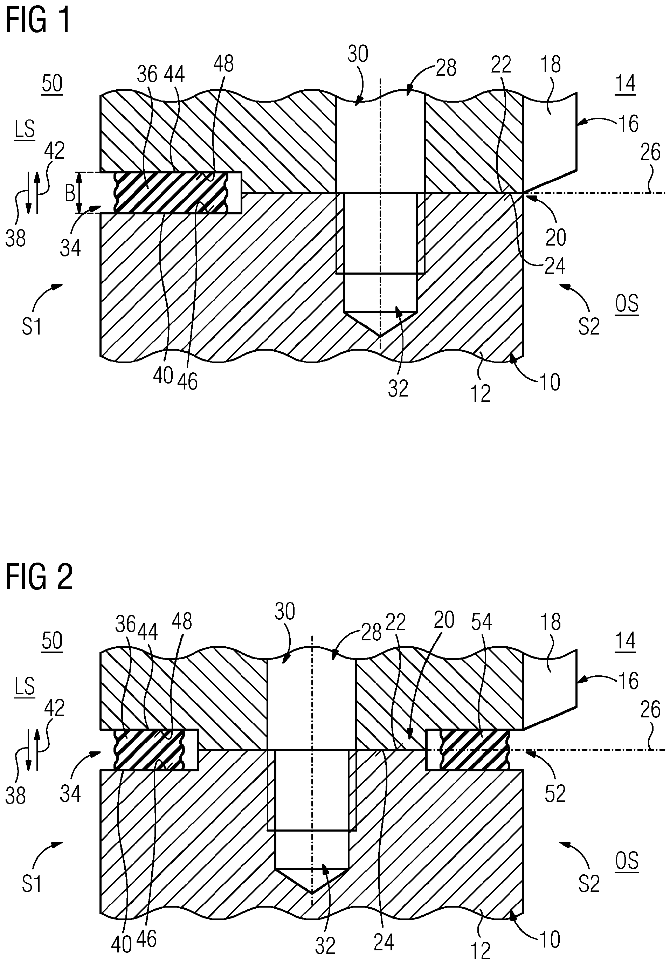

FIG 1 zeigt ausschnittsweise in einer schematischen Schnittansicht ein Getriebe 10, welches beispielsweise für eine oder in einer Windkraftanlage oder für eine oder in einer Rohrmühle verwendet wird. Insbesondere ist es denkbar, dass das Getriebe 10 als ein Planetengetriebe ausgebildet ist und somit wenigstens oder genau einen Planetenradsatz aufweist.

Das Getriebe 10 weist ein auch als Getriebegehäuse bezeichnetes Gehäuse 12 auf, welches beispielsweise einen auch als Aufnahmebereich bezeichneten Aufnahmeraum 14 zumindest teilweise, insbesondere zumindest überwiegend oder vollständig, bildet bzw. begrenzt. Das Getriebe 10 weist ein Getriebeelement 16 auf, welches bei dem in FIG 1 gezeigten Ausführungsbeispiel einstückig ausgebildet ist. Das Getriebeelement 16 weist eine Verzahnung 18 vorliegend in Form einer Innenverzahnung auf. Aus FIG 1 ist besonders gut erkennbar, dass das Gehäuse 12 und das Getriebeelement 16 als separat voneinander ausgebildete und miteinander verbundene Bauteile ausgebildet sind. Dabei ist beispielsweise das Getriebe 10 ein erstes der Bauteile bzw. das Gehäuse 12 wird auch als erstes Bauteil bezeichnet, während das Getriebeelement 16 beispielsweise ein zweites der Bauteile ist bzw. auch als zweites Bauteil bezeichnet wird.

Beispielsweise ist das Getriebeelement 16 ein Hohlrad des Planetengetriebes bzw. des Planetenradsatzes. Der Planetenradsatz kann ein in den Figuren nicht erkennbares Sonnenrad und einen Planetenträger aufweisen, wobei das Sonnenrad und/oder der Planetenträger beispielsweise um eine Drehachse relativ zu dem Gehäuse 12 drehbar sein kann. Dabei sind das Getriebeelement 16 sowie das gegebenenfalls vorgesehene Sonnenrad und der gegebenenfalls vorgesehene Planetenträger, welcher auch als Steg bezeichnet wird, in dem Gehäuse 12 angeordnet. Aus FIG 1 ist erkennbar, dass das Getriebeelement 16 zumindest teilweise, insbesondere zumindest überwiegend oder vollständig, in dem Aufnahmebereich 14 und somit in dem Gehäuse 12 angeordnet sein kann. An dem Planetenträger ist beispielsweise wenigstens ein Planetenrad drehbar gelagert, welches gleichzeitig mit dem Sonnenrad und mit dem Hohlrad kämmt.

FIG 1 zeigt eine erste Ausführungsform des Getriebes 10. Dabei sind die Bauteile (Gehäuse 12 und Getriebeelement 16) drehfest miteinander verbunden. Insbesondere ist es vorzugsweise vorgesehen, dass die Bauteile ausschließlich reibschlüssig bzw. kraftschlüssig drehfest miteinander verbunden sind. Bei dem in FIG 1 gezeigten Ausführungsbeispiel sind die Bauteile über eine Flanschverbindung 20 drehmomentübertragend miteinander verbunden, sodass die Bauteile über die Flanschverbindung 20 drehmomentübertragend zusammenwirken. Hierzu umfasst die Flanschverbindung 20 eine erste Flanschfläche 22 des Gehäuses 12 und eine zweite Flanschfläche 24 des Getriebeelements 16, wobei die Flanschflächen 22 und 24 in einer, insbesondere gedachten, Flanschebene 26 angeordnet sind. Die Flanschebene 26 verläuft beispielsweise senkrecht zur axialen Richtung des Planetenradsatzes und somit senkrecht zur axialen Richtung des Getriebeelements 16. Insbesondere ist es vorgesehen, dass sich die Flanschflächen 22 und 24 gegenseitig direkt berühren, sodass die Flanschflächen 22 und 24 in der Flanschebene 26 direkt aneinander anliegen. Die Bauteile sind dabei über die Flanschflächen 22 und 24, insbesondere ausschließlich, reibschlüssig drehmomentübertragend miteinander verbunden. Hierzu sind die Bauteile beispielsweise entlang einer schräg oder vorliegend senkrecht zur Flanschebene 26 verlaufenden Verbindungsrichtung miteinander verspannt. Hierzu ist beispielsweise wenigstens eine Schraubverbindung 28 vorgesehen, mittels welcher die Bauteile, insbesondere entlang der Verbindungsrichtung, miteinander verspannt sind. Dadurch sind die Flanschflächen 22 und 24 entlang der Verbindungsrichtung aneinander gehalten, insbesondere aneinander gepresst. Hierdurch sind die Bauteile über die Flanschflächen 22 und 24 reib- bzw. kraftschlüssig derart miteinander verbunden, dass die Bauteile über die Flanschflächen 22 und 24, insbesondere ausschließlich, kraft- bzw. reibschlüssig drehmomentübertragend miteinander verbunden sind. Insbesondere sind die Bauteile, insbesondere ausschließlich, reib- bzw. kraftschlüssig drehfest miteinander verbunden.

Die Schraubverbindung 28 umfasst zwei Schrauböffnungen 30 und 32, welche sich gegenseitig überlappen bzw. überdecken. Vorliegend fluchten die Schrauböffnungen 30 und 32 beispielsweise miteinander. Die Schrauböffnung 30 ist in dem Getriebeelement 16 ausgebildet, wobei die Schrauböffnung 32 in dem Gehäuse 12 ausgebildet ist. Beispielsweise ist die Schrauböffnung 30 als eine Durchgangsöffnung ausgebildet, wobei die Schrauböffnung 32 als ein Sackloch ausgebildet sein kann. Die Schrauböffnung 30 ist beispielsweise gewindefrei, wobei in der Schrauböffnung 32 ein erstes Gewinde insbesondere in Form eines Innengewindes angeordnet ist. Hierdurch kann eine in FIG 1 nicht dargestellte Schraube der Schraubverbindungen 28 durch die Schrauböffnung 30 in axialer Richtung der Schraube hindurchgesteckt werden. Die Schraube weist ein mit dem ersten Gewinde korrespondierendes zweites Gewinde in Form eines Außengewindes auf. Die Schraube kann in einem Zustand, in welchem die Schraube durch die Schrauböffnung 30 hindurchgesteckt bzw. in die Schrauböffnung 30 eingesteckt ist, über ihr Außengewinde in das Innengewinde der Schrauböffnung 32 eingeschraubt werden. Hierdurch können die Bauteile entlang der Verbindungsrichtung miteinander verspannt werden, wodurch die Flanschflächen 22 und 24 miteinander verspannt und dabei gegeneinander gepresst werden.

Um nun einerseits über die als Reibflächen fungierenden Flanschflächen 22 und 24 eine vorteilhafte Drehmomentübertragung zwischen den Bauteilen realisieren zu können und andererseits ein hinreichend hohe Dichtheit des Getriebes 10 gewährleisten zu können, weist das Getriebe 10 wenigstens einen einerseits durch das Gehäuse 12 und andererseits durch das Getriebeelement 16 begrenzten und zumindest teilweise in der Flanschebene 26 und neben den Flanschflächen 22 und 24 angeordneten Dichtspalt 34 auf. Außerdem umfasst das Getriebe 10 wenigstens oder genau ein in dem Dichtspalt 34 zumindest teilweise, insbesondere zumindest überwiegend oder vollständig, angeordnetes Dichtungselement 36, mittels welchem Bauteile gegeneinander abgedichtet sind.

Bei der in FIG 1 gezeigten ersten Ausführungsform ist das Dichtungselement 36 als eine Flüssigdichtung, insbesondere als eine nicht-aushärtende Flüssigdichtung, ausgebildet, wobei die Flüssigdichtung die Bauteile jeweils direkt bzw. unmittelbar berührt.

Aus FIG 1 ist erkennbar, dass der Dichtspalt 34 in eine in FIG 1 durch einen Pfeil 38 veranschaulichte erste Richtung direkt durch das Gehäuse 12 und dabei direkt durch einen Wandungsbereich 40 des Gehäuses 12 begrenzt ist, wobei das Dichtungselement 36 den Wandungsbereich 40 direkt berührt. In eine der ersten Richtung entgegengesetzte und in FIG 1 durch einen Pfeil 42 veranschaulichte zweite Richtung ist der Dichtspalt 34 direkt durch das einstückig ausgebildete Getriebeelement 16, insbesondere durch einen Wandungsbereich 44 des Getriebeelements 16, begrenzt, wobei das Dichtungselement 36 auch den Wandungsbereich 44 direkt berührt. Die erste Richtung wird auch als erste Begrenzungsrichtung bezeichnet, wobei die zweite Richtung auch als zweite Begrenzungsrichtung bezeichnet wird.

Insbesondere ist aus FIG 1 erkennbar, dass der Wandungsbereich 40 eine erste Dichtfläche 46 und der Wandungsbereich 44 eine zweite Dichtfläche 48 bildet, wobei der Dichtspalt 34 beidseitig durch die Dichtflächen 46 und 48 direkt begrenzt ist. Die Flanschflächen 22 und 24 sind somit erste Funktionsflächen, welche genutzt werden, um zwischen den Bauteilen ein hinreichend hohes Drehmoment zu übertragen. Demgegenüber sind die Dichtflächen 46 und 48 zweite Funktionsflächen, welche genutzt werden, um die Bauteile gegenseitig abzudichten. Vorzugsweise unterbleibt eine Nutzung der ersten Funktionsflächen zur Abdichtung der Bauteile, wobei vorzugsweise eine Nutzung der zweiten Funktionsflächen zur Drehmomentübertragung unterbleibt. Dadurch kann eine Funktionstrennung, das heißt eine Trennung der Funktionsflächen realisiert werden, sodass einerseits auch über eine besonders hohe Lebensdauer des Getriebes 10 hinweg ein hinreichend hohes Drehmoment zwischen den Bauteilen über die ersten Funktionsflächen übertragen werden kann. Andererseits kann auch über eine hohe Lebensdauer hinweg eine hinreichende Dichtheit des Getriebes 10 gewährleistet werden, und zwar über die Dichtflächen 46 und 48 und mithilfe des Dichtungselements 36.

In FIG 1 ist mit B eine Breite des Dichtspalts 34 bezeichnet. Die Breite B ist eine Ausdehnung oder eine Erstreckung des Dichtspalts 34, wobei die Breite B entlang einer Erstreckungsrichtung verläuft, welche mit der ersten Richtung bzw. mit der zweiten Richtung zusammenfällt und somit beispielsweise mit der axialen Richtung des Getriebeelements 16 zusammenfällt bzw. parallel zur axialen Richtung des Getriebeelements 16 verläuft. Beispielsweise beträgt die Breite B 0,2 Millimeter.

In FIG 1 ist mit OS eine jeweilige Ölseite des Getriebeelements 16 und des Gehäuses 12 bezeichnet, wobei die Ölseite OS dem Innenraum 14 zugewandt und beispielsweise einer Umgebung 50 des Getriebes 10 abgewandt ist. Eine der Umgebung 50 zugewandte und auch als Außenseite bezeichnete Seite wird auch als Luftseite LS des Getriebeelements 16 bzw. des Gehäuses 12 bezeichnet.

In dem Aufnahmeraum 14 und somit auf der Ölseite OS kann ein beispielsweise als Flüssigkeit, insbesondere als Öl, ausgebildeter Schmierstoff aufgenommen bzw. angeordnet sein, wobei der Schmierstoff insbesondere genutzt wird, um das Getriebeelement 16, insbesondere die Verzahnung 18, zu schmieren und/oder zu kühlen. Durch die genannte Funktionstrennung kann eine besonders vorteilhafte Dichtheit gewährleistet werden, sodass beispielsweise sicher vermieden werden kann, dass der Schmierstoff aus dem Getriebe 10 austritt und an die Umgebung 50 und somit auf die Luftseite LS gelangt. Ebenso kann vermieden werden, dass von der Luftseite LS bzw. aus der Umgebung 50 Schmutz und/oder andere Objekte bzw. Partikel und/oder Medien unerwünschterweise in das Getriebe 10 gelangen.

Bei der in FIG 1 gezeigten ersten Ausführungsform sind der Dichtspalt 34 und somit das Dichtungselement 36 auf einer der Ölseite OS bzw. dem Aufnahmeraum 14 abgewandten Seite S1 der Flanschflächen 22 und 24 bzw. der Schraubverbindungen 28 angeordnet, sodass bei der ersten Ausführungsform der Dichtspalt 34 und somit das Dichtungselement 36 in einem äußeren Bereich der Flanschverbindung 20 angeordnet sind.

Demgegenüber zeigt FIG 2 eine zweite Ausführungsform, bei welcher auf einer der ersten Seite S1 gegenüberliegenden und beispielsweise dem Innenraum 14 bzw. der Ölseite OS zugewandten zweiten Seite S2 der Flanschverbindung 20, der Schraubverbindungen 28 bzw. der Flanschflächen 22 und 24 ein einerseits durch das Gehäuse 12 und andererseits durch das Getriebeelement 16 begrenzter und zumindest teilweise in der Flanschebene 26 angeordneter zweiter Dichtspalt 52 angeordnet ist. In dem zweiten Dichtspalt 52 ist ein zweites Dichtungselement 54 angeordnet, mittels welchem die Bauteile gegeneinander abgedichtet sind. Dabei können die vorigen und folgenden Ausführungen zum Dichtungselement 36 und zum Dichtspalt 34 ohne weiteres auch auf das Dichtungselement 54 und den Dichtspalt 52 übertragen werden und umgekehrt. Bei der in FIG 2 gezeigten zweiten Ausführungsform ist auch das Dichtungselement 54 als eine, insbesondere nicht-aushärtende, Flüssigdichtung ausgebildet.

Der Dichtspalt 34 ist entlang einer in der Flanschebene 26 verlaufenden und von der Ölseite OS bzw. von dem Aufnahmeraum 14 wegweisenden Richtung unbegrenzt und somit offen ausgebildet. Alternativ oder zusätzlich ist der Dichtspalt 52 entlang einer in der Flanschebene 26 verlaufenden und zu der Ölseite OS bzw. zu dem Aufnahmeraum 14 weisenden Seite unbegrenzt und somit offen ausgebildet.

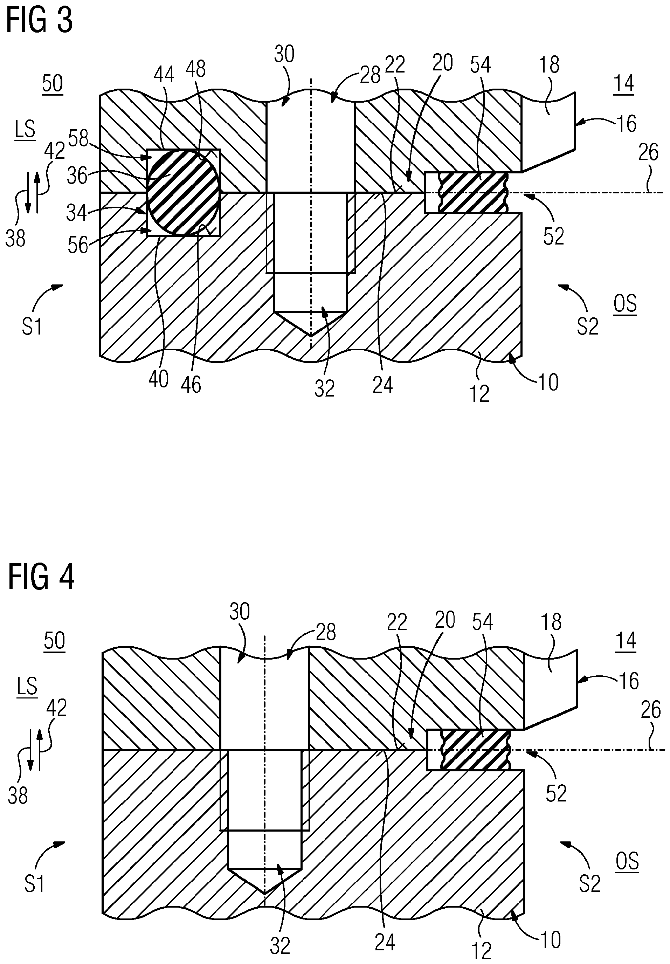

FIG 3 zeigt eine dritte Ausführungsform, bei welcher beispielsweise der Dichtspalt 52 und das darin angeordnete Dichtungselement 54 vorgesehen sind. Auf der Seite S1 jedoch ist in dem Dichtspalt 34 das Dichtungselement 36 angeordnet, welches bei der dritten Ausführungsform als ein Festkörper ausgebildet ist. Der Festkörper ist dabei aus einem elastisch verformbaren Werkstoff, insbesondere aus Gummi, gebildet. Bei der dritten Ausführungsform ist das Dichtungselement 36 als ein O-Ring ausgebildet. Der Dichtspalt 34 ist dabei durch jeweilige Ausnehmungen 56 und 58 des jeweiligen Bauteils gebildet. Dabei ist der Dichtspalt 34 sowohl zu dem Aufnahmeraum 14 hin als auch zur Umgebung 50 hin geschlossen. Bei der ersten und zweiten Ausführungsform ist der Dichtspalt 34 zu der Flanschverbindung 20 hin geschlossen, auch der Dichtspalt 52 ist zur Flanschverbindung 20 bzw. zu den Flanschflächen 22 und 24 hin geschlossen.

Schließlich zeigt FIG 4 eine vierte Ausführungsform, bei welcher lediglich die auf der Seite S2 angeordnete Dichtspalt 52 mit dem darin angeordneten Dichtungselement 54 vorgesehen sind, während im Vergleich zur ersten Ausführungsform der Dichtspalt 34 und das Dichtungselement 36 entfallen. Während somit bei der zweiten und dritten Ausführungsform eine beidseitige Abdichtung vorgesehen ist, da jeweils der Dichtspalt 34 und das Dichtungselement 36 auf der ersten Seite S1 der Flanschverbindung 20 und der Dichtspalt 52 und das Dichtungselement 54 auf der zweiten Seite S2 der Flanschverbindung 20 angeordnet sind, ist bei der ersten Ausführungsform und bei der vierten Ausführungsform lediglich eine einseitige Abdichtung vorgesehen. Durch die beidseitige Abdichtung kann beispielsweise eine Kontamination der Umwelt, des Inneren des Getriebes 10 und der Flanschflächen 22 und 24 selbst unterbunden werden.

## Patentansprüche

1. Getriebe (10), mit einem Gehäuse (12) als erstes Bauteil, und mit einem in dem Gehäuse (12) angeordneten, separat von dem Gehäuse (12) ausgebildeten und wenigstens eine Verzahnung (18) aufweisenden Getriebeelement (16) als zweites Bauteil, wobei das Gehäuse (12) und das Getriebeelement (16) über jeweilige, in einer Flanschebene (26) angeordnete Flanschflächen (22, 24) der Bauteile drehmomentübertragend zusammenwirken, und mit wenigstens einem einerseits durch das Gehäuse (12) und andererseits durch das Getriebeelement (16) begrenzten und zumindest teilweise in der Flanschebene (26) und neben den Flanschflächen (22, 24) angeordneten Dichtspalt (34), in welchem wenigstens ein Dichtungselement (36) angeordnet ist, mittels welchem die Bauteile gegeneinander abgedichtet sind.

2. Getriebe (10) nach Anspruch 1,
wobei das Dichtungselement (36) als eine Flüssigdichtung, insbesondere als eine nicht-aushärtende Flüssigdichtung, ausgebildet ist.

3. Getriebe (10) nach Anspruch 1,
wobei das Dichtungselement (36) als ein Festkörper ausgebildet ist.

4. Getriebe (10) nach Anspruch 3,
wobei das Dichtungselement (36) aus einem elastisch verformbaren Werkstoff, insbesondere aus Gummi, gebildet ist.

5. Getriebe (10) nach einem der vorhergehenden Ansprüche,
wobei das Dichtungselement (36) jeweilige, den Dichtspalt (34) direkt begrenzende Wandungsbereiche (40, 44) der Bauteile direkt berührt.

6. Getriebe (10) nach einem der vorhergehenden Ansprüche,
wobei der Dichtspalt (34) auf einer ersten Seite (S1) der Flanschflächen (22, 24) angeordnet ist, und wobei auf einer der ersten Seite (S1) gegenüberliegenden zweiten Seite (S2) der Flanschflächen (22, 24) ein einerseits durch das Gehäuse (12) und andererseits durch das Getriebeelement (16) begrenzter und zumindest teilweise in der Flanschebene (26) und neben den Flanschflächen (22, 24) angeordneter zweiter Dichtspalt (52) angeordnet ist, in welchem wenigstens ein zweites Dichtungselement (54) angeordnet ist, mittels welchem die Bauteile gegeneinander abgedichtet sind.

7. Getriebe (10) nach einem der vorhergehenden Ansprüche,
wobei die Bauteile über die Flanschflächen (22, 24), insbesondere ausschließlich, reibschlüssig drehmomentübertragend miteinander verbunden sind.

8. Getriebe (10) nach einem der vorhergehenden Ansprüche,
wobei das die Verzahnung (18) aufweisende Getriebeelement (16) einstückig ausgebildet ist.

9. Getriebe (10) nach einem der vorhergehenden Ansprüche,
wobei die Verzahnung (18) eine Innenverzahnung (18) ist.

10. Getriebe (10) nach einem der vorhergehenden Ansprüche,
wobei das Getriebe (10) als ein Planetengetriebe ausgebildet ist.

11. Getriebe (10) nach einem der vorhergehenden Ansprüche,
wobei der Dichtspalt (34) entlang einer senkrecht zur Flanschebene (26) verlaufenden Richtung (38, 42) eine Spaltbreite (B) von 0,2 mm aufweist.

12. Getriebe (10) nach einem der vorhergehenden Ansprüche, wobei die Bauteile miteinander verschraubt sind und dadurch über die Flanschflächen (22, 24) drehmomentübertragend miteinander zusammenwirken.

13. Verwendung eines Getriebes (10) nach einem der vorhergehenden Ansprüche, wobei das Getriebe (10) für eine Windkraftanlage oder für eine Rohrmühle verwendet wird.
